# EUROPÄISCHE PATENTSCHRIFT

(11) **EP 0 325 318 B1**
(45) Veröffentlichungstag und Bekanntmachung des Hinweises auf die Patenterteilung: **17.08.1994**
(21) Anmeldenummer: 89200057.1
(22) Anmeldetag: 11.01.1989
(51) Int. Cl.: H04Q 11/04

(54) **Vermittlungsanlage**
Switching exchange
Central de commutation

(30) Priorität: 16.01.1988 DE 3801123
(43) Veröffentlichungstag der Anmeldung: 26.07.1989
(73) Patentinhaber: Philips Patentverwaltung GmbH, 22335 Hamburg (DE); Philips Electronics N.V., 5621 BA Eindhoven (NL)
(72) Erfinder: Güthaus, Roland, D-8500 Nürnberg 30 (DE); Lamm, Andrea, D-8567 Neunkirchen-Speikern (DE)
(74) Vertreter: Peuckert, Hermann, Dipl.-Ing.

(56) Entgegenhaltungen:
- EP-A- 0 219 917
- EP-A- 0 273 249
- DE-A- 2 718 317
- INT. SWITCHING SYMPOSIUM, SESSION 212, PAPER 4, 25 Oktober 1976, Kyoto, JP, Seiten 1-6; M. Karnaugh et al.: "Design considerations for a digital switch"
- INT.SWITCHING SYMPOSIUM, SESSION 142, PAPER 3, 25 Oktober 1976, Kyoto, JP, Seiten 1-6; A.S. Philip: "A multipurpose digital switching subsystem"

## Beschreibung

Die Erfindung betrifft eine Vermittlungsanlage zur rechnergesteuerten Vermittlung von digitalen Eingangsdatenworten mit konstanter Datenwortlänge, welche über eine Vielzahl von Eingangsleitungen einem aus mehreren parallelen Teilkoppelfeldern aufgebauten Koppelfeld zugeführt sind und welche durch das Koppelfeld auf eine einer Verbindungsanforderung entsprechende Ausgangsleitung übertragen werden, wobei jedem Teilkoppelfeld jedes Dateneingangswort zugeführt ist und jeweils einander entsprechende Ausgänge der Teilkoppelfelder mit Eingängen eines Multiplexers und mit mehreren Vergleichern verbunden sind und wobei die Ausgänge der Vergleicher einer Auswahllogik zugeführt sind, die den Multiplexer steuert,
Vermittlungsanlagen, bei denen insbesondere die Koppelfelder verschiedenen Aufbau haben, sind allgemein bekannt und dienen für die Vermittlung einer großen Anzahl von Teilnehmerstellen. Da ein fehlerbedingter Ausfall einer derartigen Vermittlungsanlage eine große Anzahl von Teilnehmern betrifft, werden hohe Anforderungen an die Zuverlässigkeit derartiger Vermittlungsanlagen gestellt, insbesondere an die Rechner für die Erzeugung der Steuerdaten zur Einstellung der Koppelfelder, denn ein Fehler in diesem Steuerrechner kann die gesamte Vermittlungsanlage ausfallen lassen. Es ist daher üblich, zumindest die Steuerrechner für Vermittlungsanlagen doppelt oder dreifach vorzusehen, wie bspw. aus der Zeitschrift "Philips Technical Review" Vol. 41, Nr. 1983/84, Nr. 1, Seiten 1 bis 11 hervorgeht. Darin ist auch erläutert, wie es durch ein spezielles Fehlersicherungskonzept erreicht werden kann, daß die gesamte Vermittlungsanlage nicht zusammenbricht, wenn einer von mehreren Rechnern ausfallen sollte.

Es ist bekannt, zu übertragende Daten durch Hinzufügen von redundanten Bits, die auf verschiedene Weise gewonnen sein können, oder durch vollständige Umcodierung zu sichern, wobei je nach der Menge der zugefügten redundanten Bits eine mehr oder weniger umfangreiche Wiederherstellung von verfälschten Datenwörtern und in jedem Falle eine umfangreiche Erkennung falscher Datenwörter, die nicht wiederhergestellt werden können, möglich ist. Hierzu werden dem Koppelfeld eingangsseitig Coder vorgeschaltet und ausgangsseitig Decoder nachgeschaltet.

Aus der DE-PS 35 37 451 (EP-A2-0 219 917) ist es ferner bekannt, das Koppelfeld in mehrere Teilkoppelfelder zu unterteilen. Ein von einem Coder aus dem Eingangsdatenwort erzeugtes Codewort wird in vier Teilcodewörter unterteilt, wobei jedes dieser Teilcodewörter nur halb so lang ist wie das Eingangsdatenwort. Jedes Teilcodewort wird dann über jeweils ein Teilkoppelfeld übertragen. Den Teilkoppelfeldern ist ein Decoder nachgeschaltet, welcher aus allen Teilcodewörtern das ursprüngliche Codewort regeneriert. Codewörter und Teilcodewörter sind so aufgebaut, daß der Decoder bei einem verfälschten Teilcodewort in der Lage ist, das Datenwort entsprechend richtigzustellen und ein Fehlersignal zu erzeugen. Mittels des Fehlersignals wird angezeigt, bei welchem Teilkoppelfeld der Übertragungsfehler aufgetreten ist. Die Unterteilung in vier Teilkoppelfelder bietet den Vorteil, daß ein defektes Teilkoppelfeld während des laufenden Betriebs der Vermittlungsanlage ausgetauscht werden kann, ohne daß Verbindungen gestört werden. Allerdings verursacht die Codierung und Decodierung der zu vermittelnden Daten einen nicht unbeachtlichen Schaltungsaufwand. Insbesondere bei hohen Signalübertragungsraten machen sich die Signallaufzeiten in Codern und Decodern störend bemerkbar.

Die eingangs genannte Vermittlungsanlage ist aus der EP-A2-0 273 249 bekannt. Hierbei werden aus einem digitalen Eingangsdatenwort vier digitale Eingangsdatenworte erzeugt, die einem Koppelfeld mit vier Teilkoppelfeldern zugeführt werden. Die vier Eingangsdatenworte werden durch jeweils ein Teilkoppelfeld übertragen und einer Überwachungsschaltung zugeführt. In der Überwachungsschaltung wird mittels vier Vergleichern geprüft, ob ein Teilkoppelfeld defekt ist. Dazu werden ein erstes Paar der vier Datenworte einem ersten Vergleicher und ein zweites Paar einem zweiten Vergleicher zugeführt. Einem dritten Vergleicher wird ebenso wie einem vierten Vergleicher eine andere Paarkombination der Eingangsdatenworte geliefert. Die Ausgänge des dritten und vierten Vergleichers sind über ein UND-Gatter miteinander verknüpft. Diese Ausgangsdatenworte werden einem Multiplexer und einer Auswahllogik zugeführt, die den Multiplexer steuert. Der Multiplexer leitet nur bei bestimmten Bedingungen ein Datenwort weiter. Sind alle vier Datenworte gleich, so wird ein bestimmtes Datenwort an den Ausgang gegeben. Sind aber nur zwei bestimmte Datenworte identisch, so leitet der Multiplexer ein Datenwort nicht weiter.

Aufgabe der Erfindung ist es, eine Vermittlungsanlage der eingangs genannten Art anzugeben, bei der die zu vermittelnden Daten derart fehlergesichert über das Koppelfeld übertragen werden, daß bei Defekten insbesondere im Koppelfeld verfälschte Datenwörter als verfälscht erkannt und gegebenenfalls korrigiert werden können und eine Reparatur von defekten Teilen auf einfache Weise ohne Störung des Vermittlungsbetriebes möglich ist, wobei der schaltungstechnische Aufwand möglichst klein gehalten werden soll.

Diese Aufgabe wird dadurch gelöst, daß das Koppelfeld drei Teilkoppelfelder enthält, daß jeweils drei einander entsprechende Ausgänge der drei Teilkoppelfelder jeweils paarweise kombiniert werden und jede paarweise Kombination einem Vergleicher zugeführt ist und daß bei Übereinstimmung zweier beliebiger Datenwörter an entsprechenden Ausgängen der Teilkoppelfelder eines der beiden übereinstimmenden Datenworte durch den von der Auswahllogik gesteuerten Multiplexer weitergeleitet wird.

Bei der erfindungsgemäßen Vermittlungsanlage wird ein Koppelfeld aus drei Teilkoppelfeldern verwendet. Die sich entsprechenden Ausgänge der Teilkoppelfelder sind paarweise kombiniert und jede Paarkombination mit einem Vergleicher verbunden. Für einen Satz entsprechende Ausgänge der Teilkoppelfelder ergeben sich also drei Vergleicher, was gegenüber dem Stand der Technik (EP-A2 0 273 249) einen geringeren Aufwand bedeutet. Wenn zwei Datenworte gleich sind, wird bei dieser Lösung in jedem Fall ein Datenwort vom Multiplexer weitergeleitet. Eines der beiden übereinstimmenden Worte wird dabei weitergegeben.

Weitere vorteilhafte Ausgestaltungen der Erfindung ergeben sich aus den Unteransprüchen.

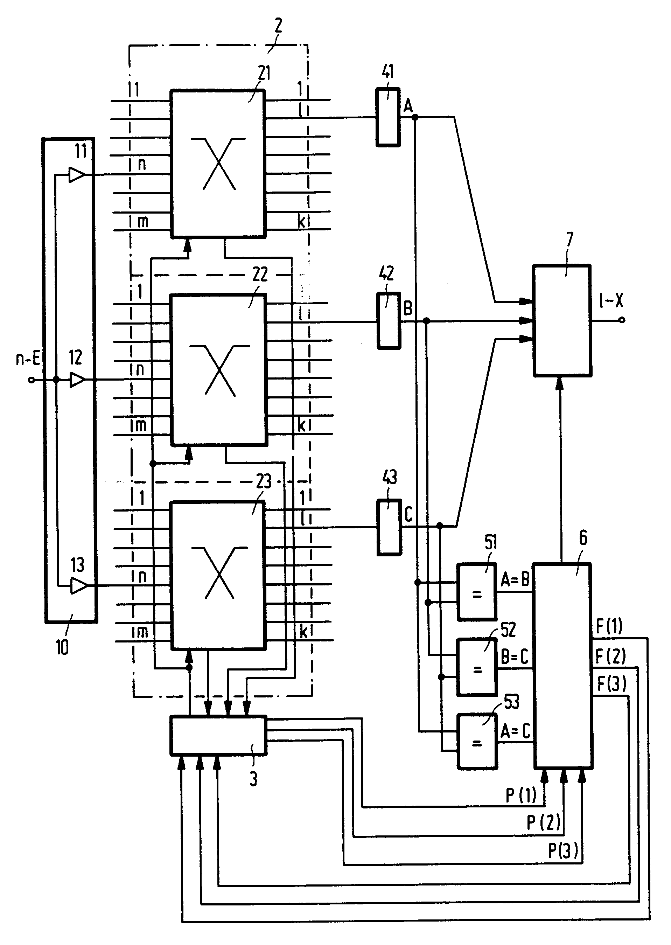

Die Erfindung wird nun anhand eines in der Zeichnung dargestellten Ausführungsbeispiels näher beschrieben und erläutert.

Der Erfindung liegt der Gedanke zugrunde, jedes Dateneingangswort auf drei voneinander unabhängigen Signalwegen zu übertragen und diese nach dem Durchlaufen der Signalwege unmittelbar miteinander zu vergleichen. Im Ausführungsbeispiel besteht das Koppelfeld 2 hierzu aus drei einzelnen, untereinander gleich aufgebauten parallelen Teilkoppelfeldern 21, 22 und 23 mit jeweils m Eingangsleitungen und k Ausgangsleitungen. Von den m zu diesem Koppelfeld führenden Eingangs- und von den k von diesem Koppelfeld wegführenden Ausgangsleitungen und der in diesen Leitungen liegenden Schaltungsanordnungen ist der Übersichtlichkeit wegen jeweils nur eine Leitung mit den in diesen beiden Leitungen liegenden Schaltungsanordnungen in der Zeichnung ausgeführt. Gezeigt ist der Signalweg zwischen einem n-ten Eingang n-E über das Koppelfeld 2 und einem l-ten Ausgang l-X.

Jede der zum Koppelfeld führenden Eingangsleitungen E wird durch je einen Verteiler, welche entsprechend der Anzahl der Eingangsleitungen m-fach ausgeführt sind, auf die drei Teilkoppelfelder aufgeteilt. Die n-te Eingangsleitung ist bspw. dem Verteiler 10 zugeführt. Jeder Verteiler besteht aus drei Entkoppelstufen - der Verteiler 10 bspw. aus den Entkoppelstufen 11, 12 und 13 -, deren Eingänge miteinander verbunden sind. Jeder Ausgang einer Entkoppelstufe ist mit jeweils einem Eingang eines Teilkoppelfeldes verbunden, wobei die Reihenfolge der Anschlüsse der Teilkoppelfelder untereinander gleich gewählt ist. Das heißt, der n-te Eingang n-E ist mit dem n-ten Verteiler 10 und der Ausgang des ersten Entkoppelbausteins 11 dieses n-ten Verteilers 10 ist mit dem n-ten Eingang des ersten Teilkoppelfeldes 21, der Ausgang des zweiten Entkoppelbausteins 12 mit dem n-ten Eingang des zweiten Teilkoppelfeldes 22 und der Ausgang des dritten Entkoppelbausteins 23 mit dem n-ten Eingang des dritten Teilkoppelfeldes 23 verbunden. Auf diese Weise erhält jedes Teilkoppelfeld auf jeweils gleiche Eingänge dieselben Eingangsdaten.

Die Einstelldaten für die Teilkoppelfelder werden von einem Einstellrechner 3 berechnet und allen Teilkoppelfeldern gleichzeitig zugeführt. In jedem Teilkoppelfeld wird auf diese Weise für ein und denselben Vermittlungsvorgang der gleiche Verbindungsweg durchgeschaltet. In bekannter Weise ist der Einstellrechner 3 mehrfach ausgeführt, um auch den Verbindungsaufbau fehlergesichert durchzuführen.

Jeder Ausgang des Teilkoppelfeldes ist einem Register zugeführt, in welchem die vermittelten Daten kurzzeitig zwischengespeichert werden. Bei k Ausgangsleitungen sind entsprechend dreimal k Register vorgesehen. Hierbei sind der Reihenfolge nach vergleichbare Ausgänge der drei Teilkoppelfelder jeweils in Dreierbündeln zusammengefaßt. Der l-te Ausgang des ersten Teilkoppelfeldes 21 ist einem ersten Register 41, der l-te Ausgang des zweiten Teilkoppelfeldes 22 einem zweiten Register 42 und der l-te Ausgang des dritten Teilkoppelfeldes 23 einem dritten Register 43 zugeführt. An den Ausgängen der Register 41, 42, 43 stehen die Datenworte A, B bzw. C an. Solange auf dem Signalweg über das Koppelfeld keine Signalverfälschungen entstehen, weisen die Datenworte A, B und C, da sie alle aus demselben Eingangsdatenwort entstammen, untereinander gleiche Dateninhalte auf.

Jeder Ausgang des Registers ist zum einen mit einem Dateneingang eines Multiplexers 7 und zum anderen mit den Eingängen von Vergleichern 51, 52 und 53 verbunden, welche die Datenworte A, B, C jeweils so paarweise miteinander vergleichen, daß alle möglichen Zweierkombinationen überprüft werden. Hierzu sind den zwei Eingängen des ersten Vergleichers 51 die Datenworte A und B, den zwei Eingängen des zweiten Vergleichers 52 die Datenworte B und C und den zwei Eingängen des dritten Vergleichers 53 die Datenworte A und C zugeführt. Bei einer Übereinstimmung der beiden jeweils zu vergleichenden Datenworte liefert der betreffende Vergleicher an seinem Ausgang einen positiven logischen Pegel. Die Ausgänge dieser Vergleicher 51, 52, 53 sind einer Auswertelogik 6 zugeführt, welche einen Multiplexer 7 steuert. Mit Hilfe des Multiplexers 7 wird aus den drei Datenwörtern A, B, C eines als Ausgangswert ausgewählt. Entsprechend k Ausgangsleitungen sind die Vergleicher dreimal k, Multiplexer 7 und Auswahllogik 6 k mal ausgeführt.

Hierzu wird folgende Auswahlregel verwendet. Stimmen alle drei Datenwörter überein, dann kann davon ausgegangen werden, daß alle drei Dateneingangswörter über das Koppelfeld richtig übertragen wurden. Von den Datenwörtern A, B, C kann jedes beliebige als Ausgangsdatenwort gewählt werden. Im Ausführungsbeispiel ist die Auswahllogik so aufgebaut, daß in diesem Fall stets das Datenwort A über entsprechende Steuerinformationen, die an den Datenwahleingang des Multiplexers 7 angelegt werden, ausgewählt wird.

Stimmen hingegen nur zwei Datenwörter überein, so ist es wahrscheinlich, daß das dritte Datenwort, das nicht übereinstimmt, verfälscht ist. Obwohl nun jeder der beiden übereinstimmenden Datenwörter als Ausgangsdatenwort gewählt werden kann, hat aufgrund der im Ausführungsbeispiel gewählten Ausgestaltung der Auswahllogik stets Datenwort A Priorität vor Datenwort B und dieses vor Datenwort C.

Stimmen also das erste Datenwort A und das zweite Datenwort B überein, so wird wiederum A als Ausgangswort über den Multiplexer 7 ausgewählt und ein Fehlersignal F(3), das einen Fehler im dritten Teilkoppelfeld 23 anzeigt, erzeugt. Stimmen das zweite Datenwort B und dritte Datenwort C überein, so wird das zweite Datenwort B ausgewählt und ein Fehlersignal F(1) für das erste Teilkoppelfeld 21 erzeugt; stimmen hingegen das erste Datenwort A und das dritte Datenwort C überein, so wird wiederum das erste Datenwort A ausgewählt und ein Fehlersignal F(2) für das zweite Teilkoppelfeld 22 erzeugt.

Stimmen hingegen die drei Datenwörter untereinander nicht überein, so ist die Wahrscheinlichkeit, daß eines von den drei Datenwörtern richtig ist, gleich groß. Aufgrund der Prioritätssteuerung der Auswahllogik wird nun willkürlich das Datenwort A ausgewählt und für alle drei Teilkoppelfelder Fehlersignale erzeugt.

Auf diese Weise wird immer ein Datenwort ausgewählt, welches mit die höchste Wahrscheinlichkeit hat, mit dem Eingangsdatenwort übereinzustimmen. Alle zu einem Teilkoppelfeld zugeordneten Fehlersignale werden in einer nicht dargestellten ODER-Schaltung zu einem Fehlersignal zusammengefaßt, so daß bereits bei einem verfälschten Datenwort auf einen Defekt in dem betroffenen Teilkoppelfeld hingewiesen wird. Das Fehlersignal wird hierzu bspw. für eine optische Statusanzeige verwendet.

Die Verwendung von drei Teilkoppelfeldern bietet den Vorteil, daß bei Ausfall eines Teilkoppelfeldes immer noch zwei Datenwörter verbleiben, die miteinander verglichen werden können. Auf diese Weise ist in den meisten Fällen ein störungsfreier Weiterbetrieb der Vermittlungsanlage möglich, wobei die verbliebenen zwei Teilkoppelfelder miteinander auf Übertragungsfehler geprüft werden. Ein als defekt gekennzeichnetes Teilkoppelfeld kann daher im laufenden Betrieb der Vermittlungsanlage ausgetauscht werden, ohne den Ablauf des Vermittlungsbetriebes zu stören. Der Schaltungsaufwand für die Auswahl und Fehlererkennungslogik ist sehr gering und durch den einfachen Aufbau der Logik entstehen nur unwesentliche Signalverzögerungen in der Auswertelogik.

Beim Austausch eines Teilkoppelfeldes wird der Betrieb der Vermittlungsanlage wie vorstehend beschrieben nicht unterbrochen. Allen Eingängen der Register 51, 52, 53 ist über nicht dargestellte Pull-up-Widerstände der logische Pegel "High" zugeführt. Wird nun eines der beiden verbliebenen Teilkoppelfelder derart defekt, daß es ebenfalls an einem oder mehreren Ausgängen konstant High-Pegel liefert, so würden diese beiden verfälschten Ausgangswerte übereinstimmen und als richtige Werte ausgewählt werden. Tritt ein solcher Fehler bei allen Ausgangsdaten eines Teilkoppelfeldes auf, so wird nicht einmal mehr ein Fehlersignal erzeugt. In einer weiteren vorteilhaften Ausgestaltung der Erfindung wird daher der Auswahllogik 6 über drei weitere Eingänge ein Präsenzsignal P(1), P(2) bzw. P(3) zugeführt. Dieses Signal gibt an, ob das jedem Signal zugeordnete Koppelfeld betriebsbereit ist. Im einfachsten Fall wird dieses Signal durch einen Schalter erzeugt, welcher nach dem Einsetzen eines Teilkoppelfeldes in das Koppelfeld eingeschaltet und vor dem Entfernen eines Teilkoppelfeldes ausgeschaltet wird. Die Auswahllogik 6 ist so aufgebaut, daß bei einem nichtanliegenden Präsenzsignal die Ausgangsdaten des betreffenden Teilkoppelfeldes zur Auswahl der als richtig für dieses Teilkoppelfeld erachteten Daten nicht herangezogen wird. Auf jeden Fall wird aber ein Fehlersignal erzeugt.

Auf diese Weise ist ein Betrieb der Anlage sogar mit nur einem Teilkoppelfeld möglich. Da die fehlenden beiden Teilkoppelfelder durch Fehlen ihres zugeordneten Präsenzsignales bei der Auswahl des als richtig erachteten Datenwortes unberücksichtigt bleiben. Obwohl die betreffenden Register übereinstimmend konstant High-Pegel erhalten, werden jeweils nur die Ausgangsdaten des in der Vermittlungsanlage verbliebenen Teilkoppelfeldes durchgeschaltet.

In einer weiteren Ausgestaltung der Erfindung wird das Präsenzsignal durch einen ständigen Selbsttest elementaren Funktionen des betroffenen Teilkoppelfeldes erzeugt. Diese Funktionen sind bspw. die Einhaltung der Betriebsspannung und das Vorhandensein des Systemtaktes. Hierzu ist bei jedem Teilkoppelfeld je eine entsprechende Überwachungseinrichtung angeordnet, welche das von ihr erzeugte Präsenzsignal über eine Signalleitung jeweils den betreffenden Eingängen der Auswerteschaltungen zuführt.

Nach dem Einsetzen eines Teilkoppelfeldes liefert dieses Teilkoppelfeld noch zunächst falsche Datenwörter, da ihm die Einstellinformationen der bestehenden Verbindungen fehlen. Daher erhält in einer weiteren Ausgestaltung der Erfindung nur der Einstellrechner 3 die Präsenzsignale der Teilkoppelfelder. Dies hat den Vorteil, bei einem Wechsel des Präsenzsignales von logisch "Low" auf logisch "High", daß der Rechner erkennt, daß ein Teilkoppelfeld neu eingesetzt worden ist. Der Rechner steuert daraufhin eine Update-Routine, mit welcher dem neu eingesetzten Teilkoppelfeld alle Einstelldaten über die bestehenden Vermittlungswege übermittelt werden. Da dem Rechner weiterhin die Fehlersignale zugeführt sind, kann er überwachen, ob das neu eingesetzte Teilkoppelfeld richtig arbeitet. Erst dann wird das entsprechende Präsenzsignal an die Auswahllogik weitergegeben und erst ab diesem Zeitpunkt werden die Ausgangsdaten des neu eingesetzten Teilkoppelfeldes für die Auswahl verwendet. Auf diese Weise wird eine hohe Betriebssicherheit der gesamten Vermittlungsanlage erreicht.

## Patentansprüche

1. Vermittlungsanlage zur rechnergesteuerten Vermittlung von digitalen Eingangsdatenworten mit konstanter Datenwortlänge, welche über eine Vielzahl von Eingangsleitungen einem aus mehreren parallelen Teilkoppelfeldern (21, 22, 23) aufgebauten Koppelfeld (2) zugeführt sind und welche durch das Koppelfeld (2) auf eine einer Verbindungsanforderung entsprechende Ausgangsleitung übertragen werden, wobei jedem Teilkoppelfeld (21, 22, 23) jedes Dateneingangswort zugeführt ist und jeweils einander entsprechende Ausgänge der Teilkoppelfelder (21, 22, 23) mit Eingängen eines Multiplexers (7) und mit mehreren Vergleichern (51, 52, 53) verbunden sind und wobei die Ausgänge der Vergleicher (51, 52, 53) eine Auswahllogik (6) zugeführt sind, die den Multiplexer (7) steuert,
dadurch gekennzeichnet,
daß das Koppelfeld (2) drei Teilkoppelfelder (21, 22, 23) enthält, daß jeweils drei einander entsprechende Ausgänge der drei Teilkoppelfelder (21, 22, 23) jeweils paarweise kombiniert werden und jede paarweise Kombination einem Vergleicher (51 52, 53) zugeführt ist und daß bei Übereinstimmung zweier beliebiger Datenwörter an entsprechenden Ausgängen der Teilkoppelfelder (21, 22, 23) eines der beiden übereinstimmenden Datenworte durch den von der Auswahllogik (6) gesteuerten Multiplexer (7) weitergeleitet wird.

2. Vermittlungsanlage nach Anspruch 1,
dadurch gekennzeichnet,
daß die Auswahllogik (6) für nichtübereinstimmende Datenworte ein Fehlersignal erzeugt.

3. Vermittlungsanlage nach Anspruch 1 oder 2,
dadurch gekennzeichnet,
daß jedem Teilkoppelfeld (21, 22, 23) eine Überwachungseinrichtung zugeordnet ist, die jeweils zur Anzeige der Betriebsbereitschaft eines Teilkoppelfeldes (21, 22, 23) ein Präsenzsignal erzeugen, und daß das von jeder Überwachungseinrichtung erzeugte Präsenzsignal der Auswahllogik (6) zugeführt wird, welche bei Fehlen eines Präsenzsignals die von einem Teilkoppelfeld (21, 22, 23) erzeugten Datenworte bei der Auswahl unberücksichtigt läßt.

## Claims

1. Switching exchange for switching in a computercontrolled manner digital input data words having a constant data word length, which are applied through a plurality of input lines to a switching network (2) formed by a plurality of parallel sub-switching networks (21, 22, 23) and which are transferred by the switching network (2) to an output line in accordance with a connection request, each sub-switching network (21, 22, 23) being supplied with each data input word and corresponding outputs of the sub-switching networks (21, 22, 23) being connected to inputs of a multiplexer (7) and a plurality of comparators (51, 52, 53), and the output signals of the comparators (51, 52, 53) being applied to a selection logic (6) which controls the multiplexer (7), characterized in that the switching network (2) comprises three sub-switching networks (21, 22, 23), in that always three matching output signals of the three sub-switching networks (21, 22, 23) are combined in pairs and each paired combination is applied to a comparator (51, 52, 53) and in that, if two arbitrary data words at corresponding outputs of the sub-switching networks (21, 22, 23) match, one of the two matching data words is conveyed by the multiplexer (7) controlled by the selection logic (6).

2. Switching exchange as claimed in Claim 1, characterized in that the selection logic (6) produces an error signal for data words that do not match.

3. Switching exchange as claimed in Claim 1 or 2, characterized in that a monitoring arrangement is assigned to each sub-switching network (21, 22, 23) which monitoring arrangement produces a presence signal to indicate that a sub-switching network (21, 22, 23) is operable, and in that the presence signal produced by each monitoring arrangement is applied to the selection logic (6) which discards for the selection, when a presence signal fails to occur, the data words produced by a sub-switching network (21, 22, 23).

## Revendications

1. Central de commutation pour la commutation commandée par ordinateur de mots de données d'entrée numériques d'une longueur constante, qui sont acheminés via une pluralité de lignes d'entrée à une matrice de commutation (2) constituée de plusieurs matrices de commutation partielles (21, 22, 23) parallèles et qui sont transmis par la matrice de commutation (2) sur une ligne de sortie correspondant à une demande de liaison, étant entendu que chaque mot d'entrée de données est acheminé à une matrice de commutation partielle (21, 22, 23) et que des sorties correspondantes des matrices de commutation partielles (21, 22, 23) sont respectivement mises en liaison avec des entrées d'un multiplexeur (7) et avec plusieurs comparateurs (51, 52, 53), et que les sorties des comparateurs (51, 52, 53) sont acheminées à un circuit logique de sélection (6) qui commande le multiplexeur (7), caractérisé en ce que la matrice de commutation (2) contient trois matrices de commutation partielles (21, 22, 23), que trois sorties mutuellement correspondantes des trois matrices de commutation partielles (21, 22, 23) sont respectivement combinées par paire et chaque combinaison par paire est acheminée à un comparateur (51, 52, 53) et que, lorsqu'il y a coïncidence entre deux mots de données quelconques aux sorties correspondantes des matrices de commutation partielles (21, 22, 23), l'un des deux mots de données correspondants est transmis par le multiplexeur (7) commandé par le circuit logique de sélection (6).

2. Central de commutation selon la revendication 1, caractérisé en ce que le circuit logique de sélection (6) produit un signal d'erreur dans le cas de mots de données non coïncidents.

3. Central de commutation selon la revendication 1 ou 2, caractérisé en ce qu'à chaque matrice de commutation partielle (21, 22, 23) est affecté un dispositif de contrôle qui produira un signal de présence chaque fois pour indiquer l'état prêt d'une matrice de commutation partielle (21, 22, 23), et que le signal de présence produit par chaque dispositif de contrôle est acheminé au circuit logique de sélection (6), qui, en l'absence d'un signal de présence, ne tient pas compte pour la sélection, des mots de données produits par une matrice de commutation partielle (21, 22, 23).
